# DEMANDE DE BREVET EUROPEEN

(11) **EP 0 987 530 A1**
(43) Date de publication de la demande: **22.03.2000**
(21) Numéro de dépôt: 99116036.7
(22) Date de dépôt: 16.08.1999
(51) Int. Cl.: G01L 1/22

(54) **Capteur d'effort de compression**

(30) Priorité: 16.09.1998 CH 189198
(71) Demandeur: S.C.A.I.M.E. S.A., 74105 Annemasse (FR)
(72) Inventeur: Aumard, Jean-Pierre, 74100 Etrembières (FR); Navarro, Jean-Claude, 74100 Ville-la-Grand (FR)
(74) Mandataire: KIRKER & Cie S.A.

(57) **Abrégé**

Capteur d'efforts de compression comportant un corps d'épreuve (1) et des jauges de contrainte (7) reliées entre elles pour former un pont de Wheatstone. Le corps d'épreuve (1) est venu d'une seule pièce de fabrication formée par un barreau monolithique cylindrique ou prismatique de section droite circulaire ou polygonale régulière. Ce barreau (1) est traversé dans sa partie médiane par au moins une paire de passages (3, 4) orthogonaux entre eux et situés dans un plan perpendiculaire à l'axe longitudinal (X) du corps d'épreuve (1) définissant entre eux des colonnes de mesure (5) indépendantes. Les faces terminales (2, 2a) du corps d'épreuve constituent des faces d'appui recevant les forces à mesurer et une jauge de contrainte (7) est fixée sur une surface de chaque colonne (5) de mesure indépendante.

## Description

La présente invention a pour objet un capteur d'effort de compression du type comportant un corps d'épreuve soumis suivant son axe longitudinal de symétrie à des efforts de compression; des jauges de contrainte étant fixées sur des surfaces de ce corps d'épreuve et reliées électriquement entre elles pour fournir un signal de sortie proportionnel à la compression du corps d'épreuve.

Les principaux buts que la présente invention se propose d'atteindre sont :
1. la réalisation d'un capteur dont le corps d'épreuve soit monolithique, d'une seule pièce, ceci afin d'assurer une bonne répartition des contraintes dans les différentes zones de mesure.
2. la réalisation d'un capteur dont le corps d'épreuve puisse être obtenu par des usinages peu nombreux et simples à partir d'un seul barreau de matériau.
3. la réalisation d'un capteur comportant un faible nombre de jauges de contrainte fixées sur des surfaces du corps d'épreuve subissant, sous l'effet de variations d'efforts de compression, une déformation suivant l'axe longitudinal du corps d'épreuve.

La réalisation de ces trois objectifs permet l'obtention d'un capteur d'efforts de compression simple à fabriquer, fiable et économique.

Le capteur d'efforts de compression selon la présente invention comporte un corps d'épreuve présentant un axe de symétrie longitudinal et comportant à chacune de ses extrémités une face d'appui. Il est destiné à être soumis à un effort de compression appliqué aux dites faces d'appui. Ce corps d'épreuve présente au moins une surface sur laquelle sont fixées des jauges de contrainte. Ce capteur d'efforts de compression se distingue par les caractéristiques énumérées à la revendication 1.

Le dessin annexé illustre schématiquement et à titre d'exemple plusieurs formes d'exécution du capteur d'efforts de compression selon l'invention.
La figure 1 est une vue en élévation du corps d'épreuve suivant une première forme d 'exécution.
La figure 2 est une vue en coupe transversale du corps d'épreuve illustré à la figure 1 suivant la ligne I-II.
La figure 3 est une vue en élévation du corps d'épreuve illustré aux figures 1 et 2 vu suivant la flèche A de la figure 2.
La figure 4 est une vue en élévation d'une seconde forme d'exécution d'un corps d'épreuve.
La figure 5 est une coupe transversale suivant la ligne V-V de la figure 4.
La figure 6 est une vue en élévation du corps d'épreuve illustré aux figures 4 et 5 vu suivant la flèche B de la figure 5.
La figure 7 est une vue en élévation d'une troisième forme d'exécution du corps d'épreuve.
La figure 8 est une coupe transversale selon la ligne VIII-VIII de la figure 7.
La figure 9 est une vue en élévation suivant la flèche C de la figure 8.
Les figures 10 et 11 sont des vues en élévation de deux autres formes d'exécution du corps d'épreuve.
La figure 12 est une vue en élévation d'un corps d'épreuve de section carrée.
La figure 13 est une vue en coupe suivant la ligne XIII-XIII de la figure 12.
La figure 14 est une vue en élévation d'un corps d'épreuve cylindrique.
La figure 15 est une vue en coupe du corps d'épreuve de la figure 14 suivant la ligne XV-XV.
La figure 16 est une vue en élévation d'un corps d'épreuve tubulaire.
La figure 17 est une vue en coupe suivant la ligne XVII-XVII de la figure 16.
La figure 18 illustre partiellement en coupe un capteur logé dans une enceinte étanche et dont les extrémités du corps d'épreuve sont en contact avec des plateaux de charge.
La figure 19 illustre partiellement en coupe une variante de montage du capteur entre des plateaux de charge.

Comme on le verra de la description détaillée qui suit de plusieurs formes d'exécution du capteur d'efforts de compression selon l'invention, ce capteur se compose d'un corps d'épreuve monolithique, c'est-à-dire obtenu par usinage à partir d'une seule pièce ou barreau de matériau, généralement de l'acier ou de l'acier inoxydable.

Ce corps d'épreuve monolithique présente la forme générale d un prisme ou d'un cylindre de section droite circulaire ou polygonale présentant un axe de symétrie longitudinal.

Les extrémités de ce corps d'épreuve constituent des faces d'appui auxquelles s'appliquent les forces de compression axiales que l'on désire mesurer.

Comme on le verra des usinages simples sont pratiqués sur ce corps d'épreuve monolithique pour y réaliser au moins quatre colonnes de mesure indépendantes.

Grâce au fait que ces colonnes de mesure indépendantes sont venues d'une seule pièce de fabrication avec les extrémités longitudinales du corps d'épreuve, ces colonnes sont soumises exclusivement à des contraintes de compression lorsque des forces parallèles à l'axe longitudinal du corps d'épreuve sont appliquées sur ses faces d'appui terminales, même si ces forces ne sont pas rigoureusement centrées sur cet axe longitudinal de symétrie.

De ce fait il est possible de mesurer les contraintes de compression engendrées par une seule mesure de compression sur chaque colonne, ce qui réduit grandement le nombre de jauges de contrainte nécessaire, une seule par colonne, et permet la réalisation d'un capteur plus économique que le capteur de compression à colonnes non monolithiques existant actuellement.

De plus grâce au fait que le corps d'épreuve est monolithique, on évite toutes les sources d'effets secondaires tendant à parasiter la transmission des contraintes dans les colonnes de mesure. On évite également d'exercer sur ces colonnes de mesure des efforts de flexion ou de cisaillement qui nuisent à la mesure des contraintes de compression.

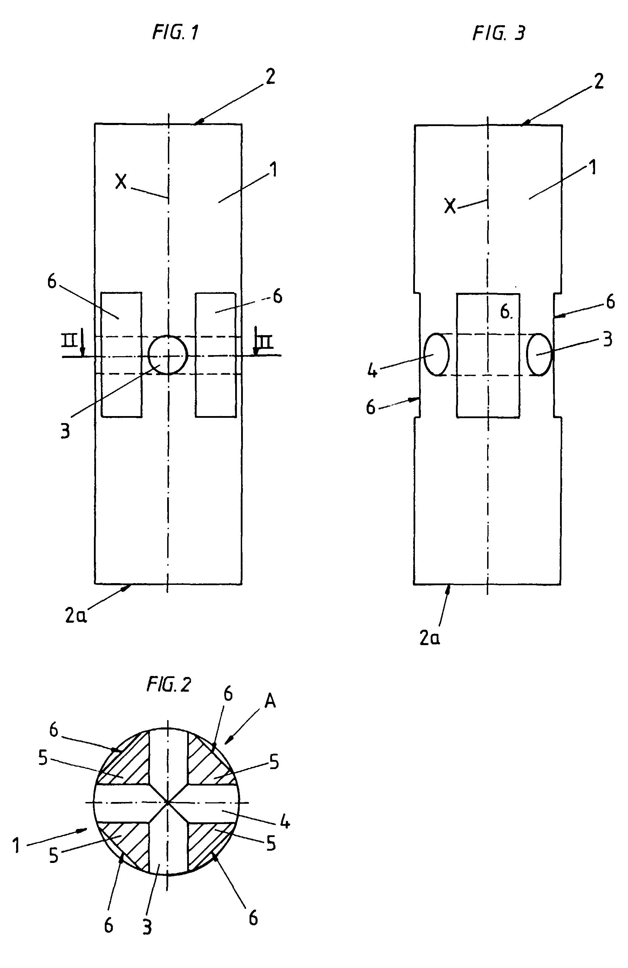

La première forme d'exécution du capteur illustrée aux figures 1 à 3 comporte un corps d'épreuve formé d'un barreau 1 cylindrique de section droite circulaire.

Les extrémités du barreau 1 présentent des faces d'appui 2, 2a auxquelles sont appliquées les forces à mesurer suivant une direction sensiblement parallèle à l'axe longitudinal X du barreau 1.

Approximativement au milieu de sa longueur, le barreau 1 est percé de deux perçages 3, 4 orthogonaux entre eux et perpendiculaires à l'axe longitudinal du barreau 1.

Ces perçages 3, 4 définissent entre eux quatre colonnes de mesure 5 indépendantes.

Des facettes planes 6 sont usinées sur la surface extérieure du barreau 1 s'étendant longitudinalement de part et d'autre des perçages 3, 4. Ces facettes 6 sont orthogonales entre elles et disposées symétriquement par rapport aux perçages 3, 4.

Sur les facettes planes 6 sont fixées par tous moyens connus des jauges de contrainte, à raison d'une par facette 6, dont la résistance varie proportionnellement aux déformations longitudinales des colonnes 5.

Ces jauges de contrainte sont montées dans un pont de Wheatstone délivrant, pour une tension d'alimentation constante, une tension de mesure proportionnelle à la somme des contraintes de compression engendrées dans les quatre colonnes par les forces appliquées sur les faces d'appui 2, 2a du barreau 1.

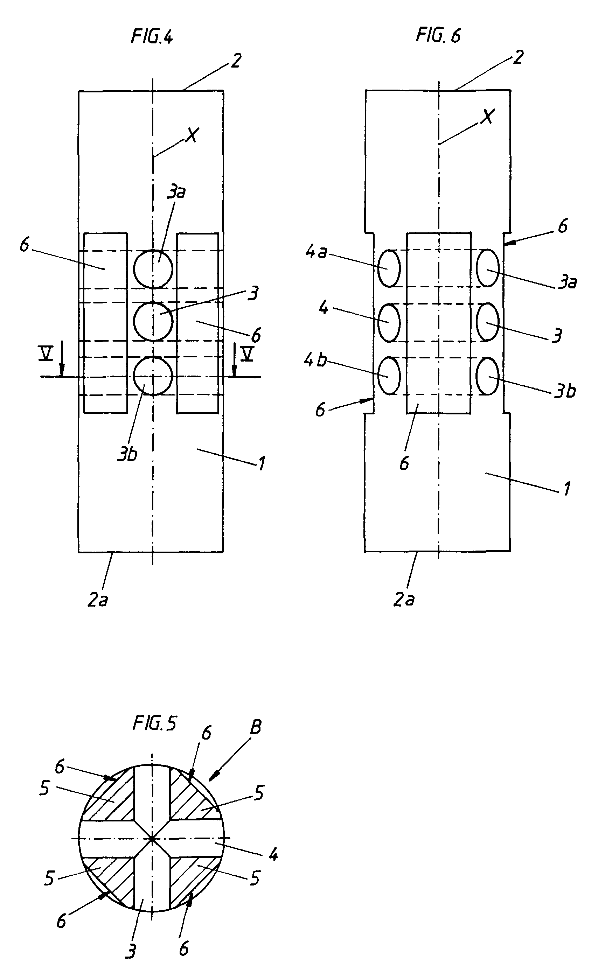

Dans la seconde forme d'exécution illustrée aux figures 4 à 6, le corps d'épreuve est également formé d'un barreau cylindrique de section droite circulaire, d'axe longitudinal de symétrie X, présentant des faces terminales ou d'appui 2, 2a.

Comme dans la première forme d'exécution une paire de perçages orthogonaux 3, 4 est usinée perpendiculairement à l'axe longitudinal X à travers le barreau 1 sensiblement au milieu de sa longueur.

Ce corps d'épreuve 1 présente encore deux paires de perçages 3a, 4a et 3b, 4b orthogonaux et perpendiculaires à l'axe longitudinal X, alignés sur les perçages 3, 4 correspondants et disposés de part et d'autre de ces perçages 3, 4.

Les facettes planes 6 reçevant les jauges de contrainte sont plus longues que dans la première forme d'exécution et s'étendent sur une distance au moins égale à celle séparant les perçages 4a, 4b et 3a, 3b.

Ces perçages 3, 3a, 3b et 4, 4a, 4b créent également des colonnes de mesure 5 indépendantes comme dans la première forme d'exécution, la hauteur de ces colonnes étant plus grande que dans la première forme d'exécution.

Dans cette forme d'exécution les jauges de contrainte sont également fixées sur les facettes 6. Si l'on désire augmenter son insensibilité aux efforts parasites on peut fixer deux jauges de contrainte ou plus sur chaque facette 6.

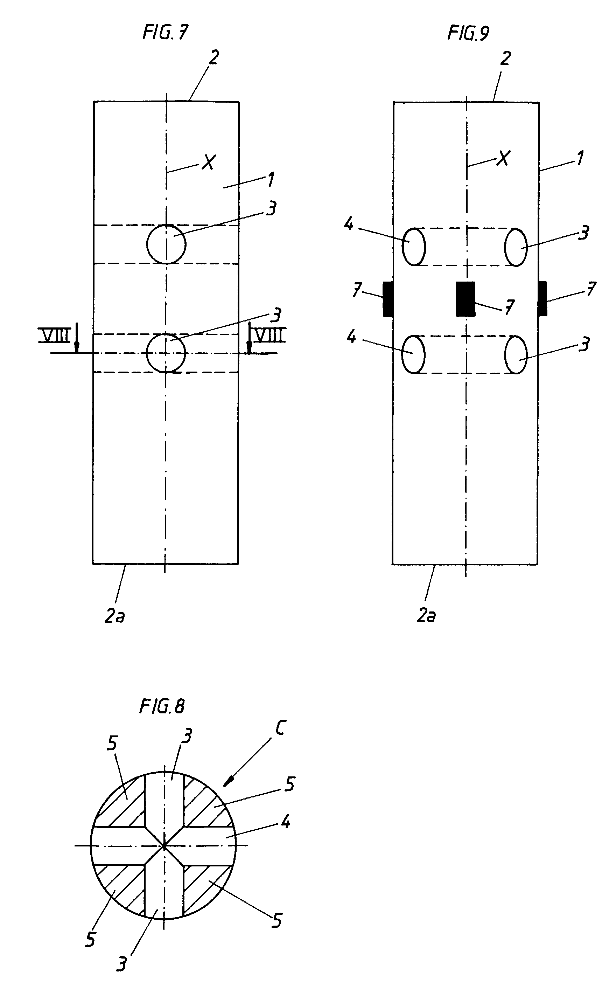

Dans la forme d'exécution illustrée aux figures 7 à 9 le corps d'épreuve est un barreau 1 cylindrique de section droite circulaire dont les faces terminales constituent des faces d'appui 2, 2a.

Ce barreau 1 est percé de deux paires de perçages 3, 4 situés de part et d'autre de sa section médiane, orthogonaux entre eux et perpendiculaires à l'axe longitudinal X du barreau 1.

Ces perçages définissent des zones 5 de la section du barreau 1, s'étendant sur la distance séparant les deux paires de trous, dans lesquelles les contraintes de compression sont rassemblées et constituent ainsi quatre colonnes de mesure indépendantes.

Des jauges de contrainte 7 sont fixées sur la surface périphérique des zones 5 entre les perçages 3, 4 pour transformer les variations de longueur des colonnes de mesure sous l'effet des forces appliquées aux faces d'appui 2, 2a en variations d'un courant électrique de mesure.

Dans cette forme d'exécution les jauges de contrainte sont solidaires d'un support souple pouvant s'appliquer sur la surface périphérique cylindrique du barreau 1.

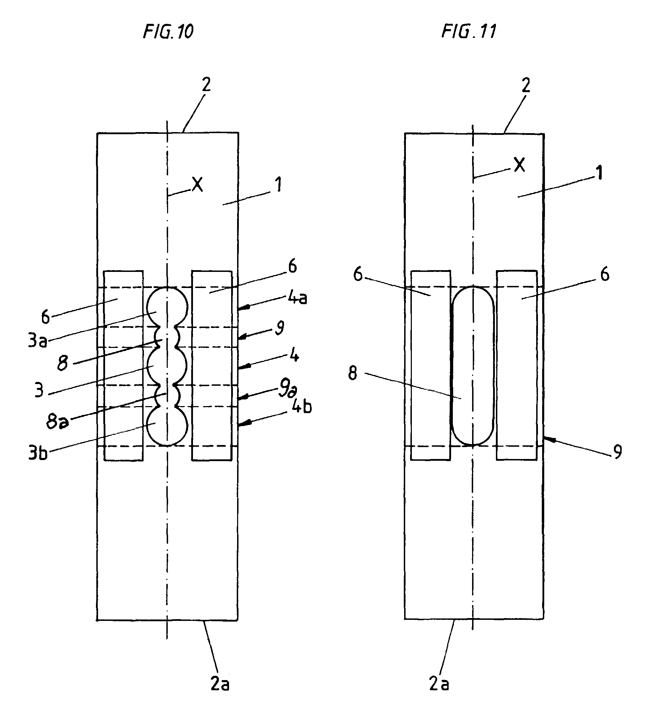

La forme d'exécution illustrée à la figure 10 comporte un corps d'épreuve formé d'un barreau 1 cylindrique de section droite comportant des paires de perçages 3, 4; 3a, 4a; 3b, 4b orthogonaux entre eux et alignés ainsi que des facettes 6 recevant des jauges de contrainte.

Entre les paires de perçages 3, 4; 3a, 4a; 3b, 4b sont situés des perçages secondaires 8, 9; 8a, 9a orthogonaux entre eux et perpendiculaires à l'axe longitudinal X du barreau 1. Ces perçages secondaires 8, 9; 8a, 9a sont alignés sur les paires de perçages 3, 4; 3a, 4a; 3b, 4b et intersectent chacun deux de ceux-ci. Ainsi sont formés des évidements transversaux s'étendant sur une distance déterminée de la hauteur du barreau 1.

Les sections pleines du barreau 1 entre ces évidements constituent quatre colonnes de mesure.

Dans la forme d'exécution illustrée à la figure 11 le corps d'épreuve se présente sous la forme d'un barreau 1 cylindrique de section droite circulaire dont les faces terminales constituent des faces d'appui 2, 2a. Ce barreau 1 présente dans sa partie centrale des fentes ou lumières 8, 9 longitudinales traversantes orthogonales entre elles et perpendiculaires à l'axe longitudinal X du barreau 1.

Comme dans certaines des formes d'exécution précédentes, des facettes planes 6 sont usinées dans la surface périphérique du barreau 1. Le plan de ces faces est perpendiculaire à des plans bissecteurs des plans longitudinaux de symétrie des fentes 8, 9. Ces facettes 6 sont destinées à recevoir chacune une ou plusieurs jauges de contrainte.

Les évidements déterminés par les fentes transversales 8, 9 délimitent quatre colonnes de mesure indépendantes dans le corps d'épreuve.

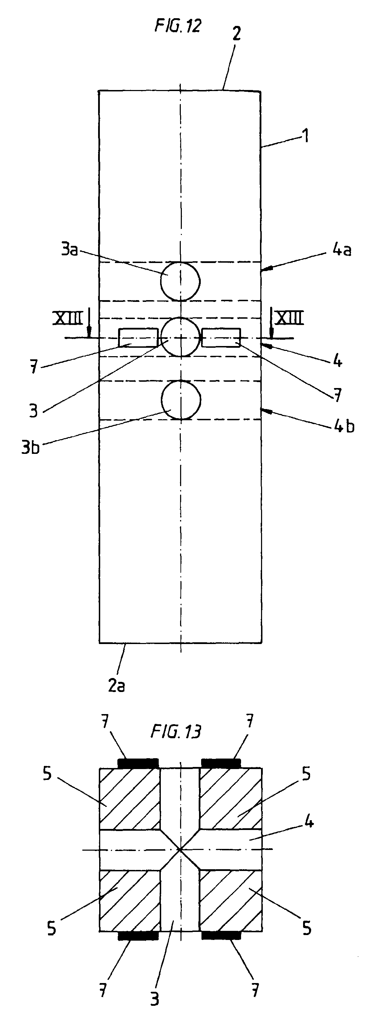

Dans la forme d'exécution illustrée aux figures 12 et 13 le corps d'épreuve est formé d'un barreau 1 prismatique de section droite carrée dont les faces terminales constituent des faces d'appui 2, 2a. Dans l'exemple illustré trois paires de perçages traversants 3, 3a, 3b; 4, 4a, 4b orthogonaux entre eux et perpendiculaires à l'axe longitudinal X du barreau sont usinés dans celui-ci. Ces perçages définissent des colonnes de mesure 5 indépendantes dans le barreau 1.

Des jauges de contrainte 7 sont appliquées contre la surface périphérique du barreau 1 dans la zone de celui-ci comportant les colonnes 5. De préférence, pour des commodités de fixation et de branchement, ces jauges de contrainte 7 sont disposées sur des faces opposées du barreau 1. Mais celles-ci peuvent être disposées différemment.

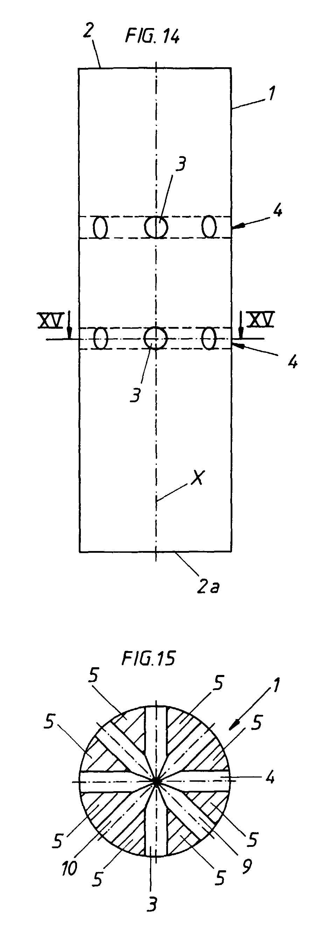

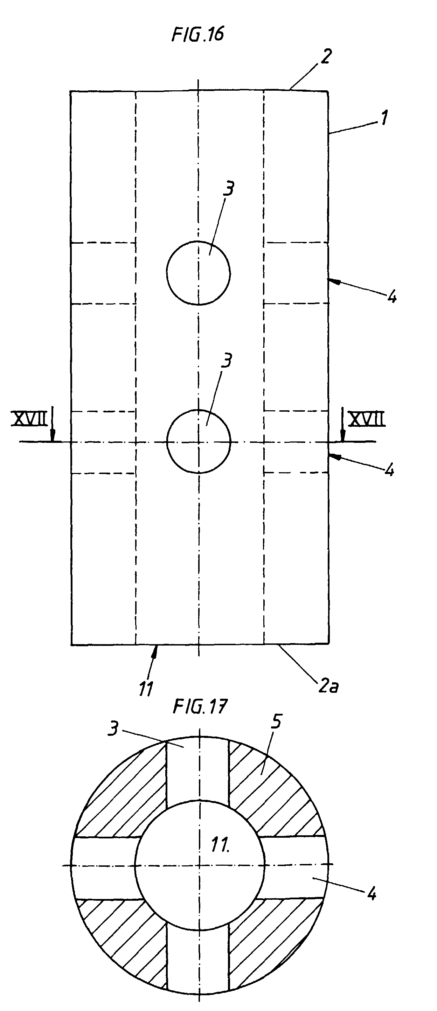

Les figures 14 et 15 illustrent une forme d'exécution semblable à celle illustrée aux figures 7, 8 et 9 présentant un corps d'épreuve 1 cylindrique de section droite circulaire et dont les faces terminales forment deux faces d'appui 2, 2a.

Dans cette exécution le corps d'épreuve comporte huit paires de perçages 3, 4, 9, 10 perpendiculaires à l'axe longitudinal X du barreau 1 et uniformément répartis autour de cet axe X.

Ces perçages définissent ainsi huit colonnes de mesure 5 indépendantes dont la paroi périphérique de chacune d'elles est munie d'au moins une jauge de contrainte.

La forme d'exécution illustrée aux figures 16 et 17 est également semblable à celle des figures 7 à 9 sauf que le barreau 1 formant le corps d'épreuve est tubulaire, ledit barreau 1 présentant un perçage central axial 11.

Les jauges de contrainte sont fixées sur la paroi interne ou externe des colonnes de mesure 5 dans la zone médiane du barreau 1.

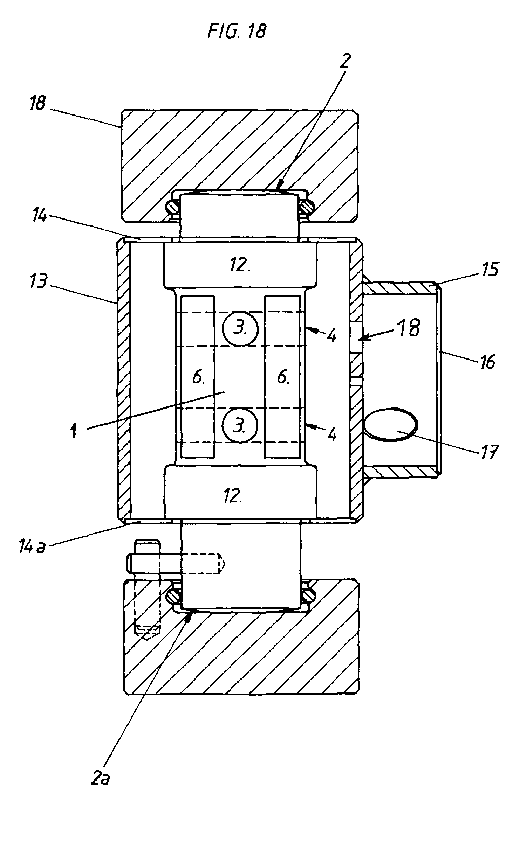

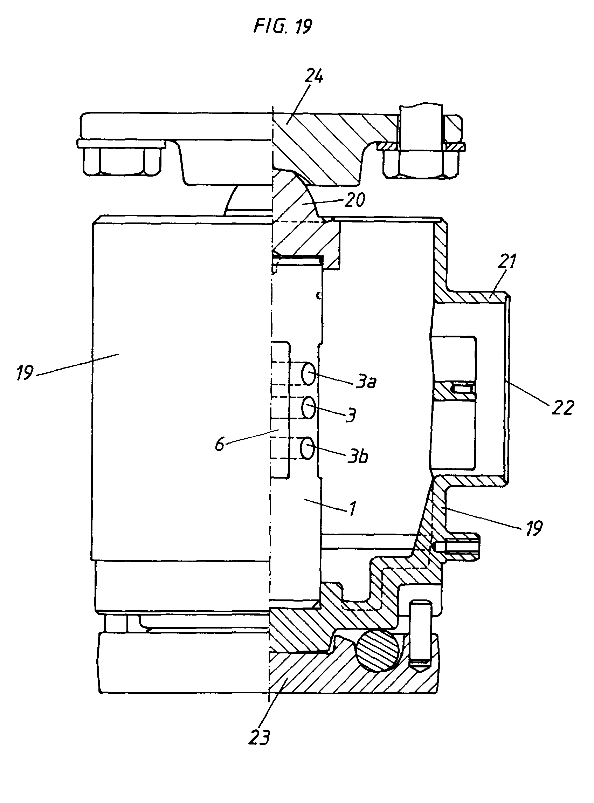

Suivant l'environnement dans lequel les capteurs doivent travailler, leur protection contre des agents extérieurs est nécessaire. Les figures 18 et 19 illustrent en coupe deux capteurs munis de leur protection en position de service.

Le capteur illustré à la figure 18 comporte un corps d'épreuve 1 cylindrique de section droite circulaire muni comme on l'a vu précédemment de deux paires de perçages 3, 4 orthogonaux entre eux et perpendiculaires à l'axe longitudinal X du corps d'épreuve 1. Des facettes planes 6 sont usinées sur la surface périphérique de la portion médiane du corps d'épreuve 1.

Dans cette variante les faces terminales du corps d'épreuve 1 sont bombées et constituent deux faces d'appui 2, 2a sphériques.

Entre ces faces d'appui 2, 2a et la portion médiane comportant les facettes 6, le corps d'épreuve comporte des bossages de plus grand diamètre 12 dont les surfaces annulaires dirigées vers les faces d'appui 2, 2a sont contenues dans un plan perpendiculaire à l'axe de symétrie longitudinal du corps d'épreuve 1.

Un boîtier protège la partie active de ce corps d'épreuve 1. Ce boîtier comporte une partie tubulaire 13 entourant le corps d'épreuve 1 et deux flancs 14, 14a annulaires soudés d'une part sur les extrémités de cette partie tubulaire 13 et d'autre part sur les parties de grands diamètres 12 du corps d'épreuve.

Cette partie tubulaire 13 est munie sur le côté d'un boîtier soudé 15 obturé par un couvercle 16 également soudé. Des trous 17, 18 relient l'intérieur du boîtier 15, 16 à l'intérieur de la protection tubulaire 13, 14 et permettent de passer les fils électriques nécessaires à relier les jauges de contrainte fixées sur les facettes 6 a la partie électrique du système de mesure, pont de Wheatstone, etc.. logé dans le boîtier 15, 16.

Un orifice 17 pratiqué dans le boîtier 15, 16 permet de relier les fils électriques connectés au pont de mesure à un appareil de mesure ou de télétransmission de la mesure.

Les faces d'appui 2, 2a du corps d'épreuve sont en appui contre des faces planes que comporte un organe ou plateau de transmission des efforts 18.

De cette façon le corps d'épreuve, les jauges de contrainte et la partie électrique de mesure sont hermétiquement encapsulés et protégés des atteintes de l'environnement.

Un autre type de montage in situ du capteur est montré à la figure 19. Le corps d'épreuve 1, du type de celui illustré aux figures 4 à 6, est placé dans un boîtier 19.

L'extrémité libre du corps d'épreuve 1 reçoit une pièce de transmission d'effort 20 présentant une surface supérieure hémisphérique. Une paroi annulaire 21 est soudée entre cette pièce de transmission 20 et la coupelle 19. Cette coupelle comporte latéralement un boîtier 21 logeant la partie électrique de mesure, boîtier obturé par un disque 22 soudé sur celui-ci.

La coupelle 19 repose sur une pièce d'appui 23 tandis qu'une autre pièce d'appui 24 est en contact avec la pièce de transmission 20.

Les jauges de contrainte, lorsqu'elles sont soumises à une compression suivant l'axe de leurs brins, voient leur résistance diminuer et lorsqu'elles sont orientées suivant une direction, perpendiculaire mais coplanaire à la première, voient leur résistance augmenter par effet du coefficient de Poisson du matériau.

En plaçant sur deux colonnes de mesure 5 opposées des jauges de contrainte orientées de manière à ce que leur résistance diminue lors de la compression de ces colonnes 5 et en plaçant sur les deux autres colonnes de mesure 5 du même corps d'épreuve 1 des jauges de contrainte orientées de telle façon que leur résistance augmente lors de la compression des colonnes 5 correspondantes, on dispose ainsi de la sensibilité de la mesure maximum, lorsqu'elles sont associées en pont de Wheatstone.

## Revendications

1. Capteur d'efforts de compression comportant un corps d'épreuve et des jauges de contrainte reliées entre elles pour former un pont de Wheatstone, caractérisé par le fait que le corps d'épreuve est venu d'une seule pièce de fabrication formée par un barreau monolithique cylindrique ou prismatique de section droite circulaire ou polygonale régulière; par le fait que ce barreau est traversé dans sa partie médiane par au moins une paire de passages orthogonaux entre eux et situés dans un plan perpendiculaire à l'axe longitudinal du corps d'épreuve définissant entre eux des colonnes de mesure indépendantes; par le fait que les faces terminales du corps d'épreuve constituent des faces d'appui recevant les forces à mesurer; et par le fait qu'une jauge de contrainte est fixée sur une surface de chaque colonne de mesure indépendante.

2. Capteur selon la revendication 1 caractérisé par le fait que les passages traversants sont constitués chacun par un perçage.

3. Capteur selon la revendication 1 caractérisé par le fait que les passages traversants sont constitués par des fentes ou lumières longitudinales.

4. Capteur selon la revendication 1 caractérisé par le fait que les passages traversants sont constitués de perçages d'axes parallèles s'intersectant.

5. Capteur selon l'une des revendications précédentes caractérisé par le fait que le corps d'épreuve comporte plusieurs paires de passages traversants décalés le long de l'axe longitudinal du corps d'épreuve et alignés les uns sur les autres.

6. Capteur selon l'une des revendications précédentes caractérisé par le fait que le corps d'épreuve comporte au moins une série de passages traversants orthogonaux entre eux et situés dans un plan perpendiculaire à l'axe longitudinal du corps d'épreuve comportant au moins six passages traversants uniforméments répartis autour de l'axe longitudinal du corps d'épreuve.

7. Capteur selon la revendication 6 caractérisé par le fait qu'il comporte plusieurs séries de passages traversants décalés longitudinalement mais alignés longitudinalement les uns sur les autres.

8. Capteur selon l'une des revendications précédentes caractérisé par le fait que le corps d'épreuve comporte, dans sa partie médiane munie de passages traversants, des facettes planes sur sa périphérie situées entre lesdits passages et destinées à recevoir les jauges de contrainte.

9. Capteur selon l'une des revendications précédentes caractérisé par le fait que la section droite du corps d'épreuve est circulaire.

10. Capteur selon l'une des revendications 1 à 9 caractérisé par le fait que la section droite du corps d'épreuve est polygonale, le nombre de faces étant pair.

11. Capteur selon l'une des revendications 1 à 10 caractérisé par le fait que la section droite du corps d'épreuve est tubulaire.

12. Capteur selon l'une des revendications précédentes caractérisé par le fait que les faces d'appui du corps d'épreuve sont planes.

13. Capteur selon l'une des revendications 1 à 12 caractérisé par le fait que les faces d'appui du corps d'épreuve sont bombées, de préférence sphériques.
